# EUROPEAN PATENT APPLICATION

(11) **EP 0 933 411 A1**
(43) Date of publication of application: **04.08.1999**
(21) Application number: 97924354.0
(22) Date of filing: 09.06.1997
(51) Int. Cl.: C09D 201/00, C09D 101/00, C09D 105/08

(54) **COATING MATERIALS FOR FORMING INFORMATION DISPLAY SURFACES AND DISPLAY MEDIUM**

(30) Priority: 21.08.1996 JP 21986196; 03.10.1996 JP 26297196
(71) Applicant: IDEMITSU PETROCHEMICAL CO., LTD., Tokyo 108-0014 (JP)
(72) Inventor: FUKATSU, Fumioki, Himeji-shi, Hyogo-ken 672 (JP)
(74) Representative: Jackson, Peter Arthur
(86) International application number: JP9701957
(87) International publication number: WO9807799

(57) **Abstract**

A coating material for forming an information display surface of the present invention contains a water absorbent substance and a water-soluble substance. The water absorbent substance is protein such as collagen or polysaccharide such as cellulose. A display medium has a base material for display made of polyolefin type resin and the like on which the information display surface made of the coating material is formed. Another coating material for forming the information display surface contains an ultraviolet curable resin and a natural organic substance as major components. The natural organic substance is collagen, wool, keratin and so on.

## Description

### Technical Field

The present invention relates to a coating material for forming an information display surface which makes up a medium for writing and printing letters etc. on the surface of a resin film, a plastic product and glass product, and a display medium on which the coating material is coated.

### Background Art

Paper is usually used as a medium for displaying information in writing or printing. When the information is written with writing materials such as a fountain pen on a piece of paper, the paper is required to have high absorbency of water base ink in order to obtain a good drying characteristic and sharpness. When an ink jet printer which is rapidly becoming popular accompanied by the popularity of personal computers and word processors is used to print onto a paper, similar characteristics are required of the paper.

Meanwhile, in recent years a resin film instead of paper has come to be used for the information medium. Such a resin film for printing is widely used in offices, schools, and so on as a film for an overhead projector, for instance. As for this kind of resin film, it is preferable to have the same good drying characteristic and sharpness as required of paper for printing with water base ink.

In order to give such characteristics as above to the resin film for printing, a coating material is coated on the surface of a base film. Polyvinyl alcohol and the like (Japanese Patent Laid-open No. Hei 6-32047) and polyvinyl acetate-styrene copolymer (Japanese Patent Laid-open No. Hei 6-219042) have been proposed as the coating material.

However, these coating materials are too viscous to use for coating, and in addition to such disadvantage, the coating film obtained with these materials is poor in print sharpness due to insufficient water absorbency and is poor in water resistance. These disadvantages are ascribable to water solubility of resin substrate in the coating material. In other words, one of the major causes for the above disadvantages is that ink spreads freely in a substrate of the water-soluble resin.

And when information such as letters, numerical numbers, drawings, is written or printed directly on plastic, glass, metal products or the like, it is sometimes difficult to obtain sharp and abrasion-resistant letters and the like with a common writing instrument or an ordinary coating material, because the surface is smooth.

To avoid these disadvantages, usually a gummed label or a paper label is stuck on these products and the information is written on these labels.

However, when the gummed label or the paper label is used, they must be prepared in advance and be stuck one by one on the product, which is a time-consuming job. Additionally, when the labels are pasted on plastic bottles, especially on a plastic shampoo bottle, they are apt to be peeled off during use because of poor water resistance, since the bottle is used under high temperature and high humidity conditions such as a bathroom.

On the other hand, it has been also put into practice that a coating material for an information display surface is prepared by mixing silica etc. into a resin, then the coating material thus obtained is printed on a surface of a plastic product or the like to form a coating film, and information is written on this coating film as a medium. In recent years, an ultraviolet curable resin has been used for the resin, and since the coating material for preparing a surface for an information display containing the ultraviolet curable resin is extremely excellent in productivity and in coating film properties, it is getting to be the mainstream of the coating material for the information display surface.

The coating material for forming the information display surface containing the ultraviolet curable resin is excellent in view of a working environmental and the curing time of the coating film is short since the solvent content is small. And the strength of the coating film is also excellent. Accordingly, the coating material is expected to rapidly spread over other fields such as the packaging field in the future.

As a new application area of such coating material, especially a CD-R (a recordable Compact Disk) can be named. It is necessary for the CD-R to have the contents of the record listed on the surface thereof as in the case of a cassette tape. A paper label is not suitable for the purpose, because it can be peeled off to cause trouble of the CD drive. Therefore, the coating material without such disadvantages is expected to have demand as a medium for forming the information display surface of the CD-R.

Though the coating material for forming the information display surface containing the above-described UV curable resin has many advantages, it is not flawless.

That is, the conventional coating material for forming the information display surface is poor in chemical resistance. So it has a disadvantage that the coating film becomes brittle and is peeled off when a print printed with this coating material is immersed in alcohol for 24 hours, for instance. At present, a chemical additive is added in the coating material to improve alcohol resistance of the coating film formed of the coating material for forming the information display surface.

However, the above method requires a complicated process of making the coating material for forming the information display surface prepared in a two-liquid type and combining them just before printing. And when excessive combined coating material remains, it must be disposed of because it is not suited to keep for a long time. Furthermore, when a printing work is continued for hours, troubles such as print failures due to increase of viscosity of the coating material, change of tint, and deterioration of the curing characteristic, could occur with the passage of time.

In addition to that, though the conventional coating material for forming the information display surface has advantages that the strength of the coating film is excellent and the water resistance is superior, it has disadvantages of poor feeling and poor writing acceptability (smoothness in writing) resulting from the properties of excess hardness, and no water absorbency. A matting agent has been mixed to the coating material to improve the appearance and the touch by making the surface of the coating film a matt finish, but sufficient improvement has not been obtained.

### Disclosure of the Invention

A coating material for forming an information display surface according to first aspect of the present invention is characterized by containing a water absorbent substance and a water-soluble substance.

Concrete examples of the water absorbent substance are optional, but it is necessary to choose a substance which does not give a harmful effect as a coating material when being mixed with other ingredients such as a binder and the like.

The water-soluble substance includes synthetic materials, derivatives of natural substances (semi-synthetic materials), and natural substances.

The water-soluble substance described above includes polyvinyl alcohol, polyvinyl pyrolidone, styrene-polyvinyl pyrolidone copolymer, cellulose derivatives (CMC and the like), water-soluble collagen, gelatin, betaine and so on.

It is necessary to be careful in choosing a specific water-soluble substance because the chosen substance may exert a bad effect on other ingredients such as a binder and the like, due to properties thereof such as ionicity. For instance, when gelatin is mixed with a certain resin emulsion, the emulsion structure can be destroyed to precipitate the resin.

The coating material includes so-called ink or paint, according to a field applied.

Other ingredients may be contained in the coating material as long as the water absorbent substance and the water-soluble substance are contained therein.

When the water absorbent material is mixed to the coating material, spreading of the water base ink on the display medium thus formed is controlled, and the drying speed of the ink on the surface is prevented from being lowered and letters, drawings and so on can be clearly printed.

It is preferable that the water absorbent substance is a fine powder of at least one of protein and polysaccharide.

There is no limitation to the average particle diameter of the fine powder, but it is preferably less than 60 µm. When the average particle diameter exceeds 60 µm, the surface of the display medium becomes rough and the touch becomes undesirable. The printability is likely to be deteriorated. The more preferable average particle diameter is less than 30 µm, and further preferably, less than 7 µm.

The protein includes at least one material selected from the group consisting of collagen, silk, wool, keratin, and egg shell membrane.

A concrete example of protein is not limited to the concrete examples cited above, but the cited examples are preferable in view of property, price, availability, etc.

The polysaccharide includes at least one material selected from the group consisting of cellulose, chitin, and chitosan.

A concrete example of the polysaccharide is not limited to the concrete examples cited above, but the above example is preferable in view of property, price, availability etc.

It is preferable for the coating material of the present invention to contain a resin base binder, as well as the water absorbent substance and the water-soluble substance described above.

The resin base binder includes acrylic resin, acryl-styrene copolymer, polyvinyl acetate resin, and so on. As for a dispersion system, it may be any one selected from the group consisting of emulsion (latex), colloidal dispersion and aqueous solution. The resin base binders preferably form a continuous coating film after being coated as a coating material and dried. When an aqueous resin solution is used, it is preferable to choose the one whose coating film becomes insoluble after drying.

It is preferable to use alcohol such as 2-propanol for the solvent in the coating material and a diluting agent when the coating material is diluted because it quickens drying after coating.

A display medium according to a second aspect of the present invention has a display base material on which an information display surface comprising the aforementioned coating material for the information display surface is formed on a base material for display.

Any display base material can be used for forming the display medium for the information display surface. It includes all materials such as, for instance, films for an overhead projector (OHP), drafting films, gummed labels, labels, packages, electric appliances, motor-car parts, precision parts, compact disks, various plastic molded products, metal, glass, painted boards, and slips for home-delivery.

When the display base material is a sheet (it may be a thin film), a polyolefin series resin sheet, especially a soil polyolefin series resin sheet is preferable.

The soft polyolefin series resin includes, for instance, thermoplastic olefin series elastomers (TPO). Concrete examples of the TPO are etylene-propylene co-polymer, ethylene-propylene-diene copolymer, and so on.

The soft polyolefin series resin sheet may have a multilayer structure, e.g. a triple-layer structure sheet made of multilayer series homo PP / L-LDPE /homo PP.

Hitherto, PVC which is superior in durability, softness, etc., has been widely used for an advertisement sheet such as a drop curtain, but since PVC generates chlorine and chlorine compound during incineration, the use of PVC has come to be refrained in recent years. Polyolefin series resins, especially TPO attracts attention as alternative materials. The polyolefin series resins are thought to be more superior to PVC in view of environmental protection and recycling after abandonment.

A problem of adhesion to the coating material can be improved by adding inorganic filler such as titanium oxide into the base material, when the polyolefin series resin is used as the base material.

In other words, since the polyolefin type resin base material is weak in adhesive strength, it is necessary to apply a corona discharge treatment and an anchor coating to improve the adhesive strength to the coating material. However, when the inorganic filler is added into the polyolefin type resin, the adhesive strength to the coating material can be improved only by applying the corona discharge treatment without anchor coating.

A concrete coating method of the coating material is optional and when the coating is carried out by printing, silk-screen printing, pad printing, gravure (coater) printing, roll coater, knife coater, etc. can be applied.

Since the display medium contains the water absorbent substance in the coating material, diffusion of water base ink into the display medium is refrained and the ink is quickly dried, resulting in a clear print of high definition. And since the display medium has a characteristic that the water base ink is not easily diffused being absorbed in the water absorbent substance, the display medium in water resistance can be improved.

A coating material for forming an information display surface according to third aspect of the present invention is characterized by having an ultraviolet curable resin and a natural organic substance as a main component.

Any resin such as urethane acrylate, epoxyacrylate and polyester acrylate, can be used as the ultraviolet curable resin. And lactam type, ether type, and aromatic type, and the like can be optionally used as a monomer which is combined into the coating material.

Since a natural organic substance is contained in the coating material of the present aspect, the coating film formed by using the coating material is improved in touch, chemical resistance, and writing smoothness thereof. Since the surface of the coating film is matted , it gives the printed matter a high-grade image.

Additionally, since the coating material is a one-pack type, it is unnecessary to blend before printing, which makes it easy to handle without requiring manpower for handling. Since pot life of the coating material is long due to one-pack type, the amount of the wasted coating material can be reduced, which is desirable from economical and environmental standpoint. Furthermore, since the properties such as viscosity and the like does not change for a long period of time, it is suitable for printing for long time without a break.

The natural organic substance can be a kind or more than two kinds selected from the group consisting of collagen, wool, keratin, shell membrane, silk, cellulose, hemp, cotton, chitin, chitosan, water-soluble silk, betaine, soybean protein, casein, and gelatin.

The above-mentioned collagen, wool, keratin, shell membrane, silk, cellulose, hemp, cotton, chitin, and chitosan are nonaqueous natural organic substances.

The aforementioned water-soluble silk (soluble silk protein which has a low molecular weight generated by enzyme decomposition etc.), betaine, soybean protein, and gelatin are water-soluble organic substances.

The content of the natural organic substance is preferably from 1 wt % to 50 wt %.

When the content of the natural organic substance exceeds 50 wt %, it is likely to cause deterioration of the properties of the coating film and a faulty cure. The preferable content is from 10 wt % to 40 wt %. On the other hand, when the content is less than 1 wt %, it becomes difficult to obtain good touch, chemical resistance, and writing smoothness of the coating film.

The form of the aforementioned natural organic substance may be powdery (in powder form).

The average particle diameter of the aforementioned natural organic substance is preferably less than 60 µm.

When the average particle diameter exceeds 60 µm, the surface of the coating film may become rough, giving a bad touch, lowering the printability and further causing highly possible faulty cure. The average particle diameter is preferably less than 30 µm, more preferably less than 15 µm, and the most preferable average particle diameter is less than 5 µm.

The coating material for forming the information display surface can be aqueous. For instance, a water-soluble natural organic substance such as water-soluble silk or betaine is combined with an aqueous ultra-violet curable resin (an aqueous UV coating material). When 1 to 50 wt %, more preferably from 5 to 20 wt % of the water-soluble natural organic substance is mixed to the aqueous UV coating material to be dissolved therein, a hydrophilic coating film having superior properties can be obtained since the water-soluble natural organic substance is uniformly dispersed in the coating material. And since the surface of the coating film is smooth unlike the surface of a powdery dispersion, which contributes to improve the uniformity of the writing smoothness.

Further, when dissolving the water-soluble natural organic substance, it is necessary to be careful about the combination of a natural organic substance with a coating material, because property of some aqueous ultraviolet curable coating materials can be unstable on account of its ionicity and the like, a problem of gelation.

A printed matter according to a fourth aspect of the present invention is a printed material on which the information display surface made of the coating material for forming the information display surface according to the third aspect is printed.

Any concrete method for the printing (coating) can be used, for instance, such as a silk screen printing, a pad printing, a gravure printing (coater), a roll coater, a knife coater, and so on. The particle diameter of the used power sometimes has to be selected appropriately in accordance with mesh size of the screen or the depth of the gravure printing plate according to the printing method actually employed.

Incidentally, the printed matter includes so-called coated matter, depending on a field of industry to be applied.

The material to be printed is optional and includes all sorts of articles such as packages, electric appliances, motor car parts, precision parts, compact discs, various plastic moldings, metal, glass, a coated board, a slip for home delivery and others. And it can be applied to a graphic field, a design field, printing having functional property (functional property such as chemical resistance, writing smoothness, etc.) and others.

### Best Mode for Carrying out the Invention

### First embodiment

A coating material for forming an information display surface containing a resin type binder, a water absorbent substance, and a water-soluble substance is prepared. The coating material thus prepared is coated on a substrate to form a display medium as the information display surface.

### Example 1

In the first embodiment, a concrete example of each component in the coating material and the compound ratio are decided as follows.

| | |
|---|---|
| acryl emulsion | 32 % |
| silk powder | 26 % |
| polyvinyl alcohol water solution (5 %) | 33 % |
| 2-propanol / butyl cellosolve (2 : 1) | 6 % |
| water | 3% |

After the above coating material is diluted with aqueous 2-propanol solution, thus obtained coating material is coated on a PET (polyethylene terephthalate) film for an OHP (over head projector) (manufactured by RICOH Co., Ltd.) with a bar coater to form the display medium.

### Examples from 2 to 8

In each example, the coating material is prepared with the following water absorbent substances as a concrete example, and the same components as in example 1 for the other ingredients. The display medium is formed by coating the coating material of each example on a PET film.

The water absorbent substances are collagen powder in example 2, cellulose powder in example 3, chitosan powder in example 4, chitin powder in example 5, wool in example 6, keratin powder in example 7, and egg shell membrane in example 8.

### Example 9

Instead of the PET film in example 1, a soil polyolefin type sheet is used. After the sheet is treated with a corona discharge treatment on the surface to improve the adherence to the coating material, the sheet is coated with a PP adhesive emulsion (emulsion-vinyl acetate copolymer) as an anchor coat.

The soft polyolefin type sheet has a triple-layer structure consisting of homo PP (Idemistu PP F-704NP (trade name)) / L-LDPE (Affinity PL188 (trade name)) / homo PP (Idemistu PP F-704NP (trade name)).

### Example 10

Instead of the PET film in example 1, a polypropylene sheet containing titanium oxide is used and a corona discharge treatment is applied on the surface thereof to improve the adherence to the coating material.

### Comparisons 1 to 5

The coating material in each comparison is prepared by the following substances. And a display medium is formed on the PET film in the same way as in example 1 with each coating material.

The coating material according to comparison 1 is composed of an acryl emulsion. The coating material according to comparison 2 is the coating material of example 1 excluding polyvinyl alcohol.

The coating material according to comparison 3 is the coating material in example 1 excluding silk powder.

The coating material according to comparison 4 is composed only of aqueous polyvinyl alcohol solution (5%).

In the coating material according to comparison 5, water is used instead of 2-propanol / butyl cellosolve (2 : 1). In comparison 5, the coating material is applied without diluting with aqueous 2-propanol solution.

### Evaluation of Properties

The drying characteristic of the coating materials according to the examples from 1 to 10 and comparisons from 1 to 5 after coating on a substrate and the water resistance of the display medium thus formed are evaluated. And after printing on each display medium with an ink jet printer (Mach Jet MJ00-800C, trade name, EPSON HANBAI Co., Ltd.), the drying characteristic of the water base ink and the sharpness of the print are also evaluated. These results are shown in tables 1 and 2.

The drying characteristic of the coating material is evaluated by peeling the display medium a piece of adhesive cellophane tape after heating the coated display medium at 60°C for 3 minutes to dry the medium. In the evaluation columns of the tables, the meaning of each mark is as follows. ○··· The display medium is not peeled by the adhesive tape. X··· The display medium is peeled by the adhesive tape or adhesion failure of the adhesive tape occurred due to insufficient drying.

The water resistance is evaluated by the following method. The display medium is formed on a PET film and dried completely. Then the film is dipped into water for 5 minutes and checked the residue of the display medium (the coating layer). ○···The display medium is remained in a same form as formed and is able to be printed thereon by the ink jet printer after it is dried. △···Some percentages of the display medium remained and it was possible to print on the dried display medium by the ink jet printer, but the printed image is blurred. X··· Most display medium is dissolved out and it is impossible to print on the film with the ink jet printer.

The drying characteristic of the printing is evaluated by checking the period of time from printing before the ink is dried and is not blurred even when the printed surface is rubbed by a finger. ○···Dried within 3 minutes. △··· Dried within 30 minutes. X··· Does not dry even after 30 minutes.

The sharpness of the print is evaluated enlarging the print surface to check the shape of the ink dot by enlarging the print surface. ○···The ink dot is a round shape. △···The ink dot is blurted. X···An original picture or letter can not be seen on the printed surface.

**Table 1**

| | After Coating | | After Printing by printer | |
|---|---|---|---|---|
| | Drying Characteristic | Water Resistance | Drying Characteristic | Sharpness |
| Example 1 | ○ | ○ | ○ | ○ |
| Example 2 | ○ | ○ | ○ | ○ |
| Example 3 | ○ | ○ | ○ | ○ |
| Example 4 | ○ | ○ | ○ | ○ |
| Example 5 | ○ | ○ | ○ | ○ |
| Example 6 | ○ | ○ | ○ | ○ |
| Example 7 | ○ | ○ | ○ | ○ |
| Example 8 | ○ | ○ | ○ | ○ |
| Example 9 | ○ | ○ | ○ | ○ |
| Example 10 | ○ | ○ | **○** | **○** |

**Table 2**

| | After Coating | | After Printing by printer | |
|---|---|---|---|---|
| | Drying Characteristic | Water Resistance | Drying Characteristic | Sharpness |
| Comparison 1 | ○ | ○ | X | X |
| Comparison 2 | ○ | ○ | △ | △ |
| Comparison 3 | ○ | X | X | X |
| Comparison 4 | X | X | X | X |
| Comparison 5 | X | ○ | ○ | ○ |

According to Table 1, the drying characteristic of the coating material is excellent and the water resistance of the display medium is also excellent, because each display medium according to examples 1 to 10 is composed of a coating material which contains a resin type binder, a water absorbent substance, a water-soluble substance, and contains an organic solvent.

The drying characteristic of the water base ink after printing on the display medium by the ink jet printer is excellent and the printed patterns and letters are sharp.

On the other hand, according to Table 2, the drying characteristic of the water base ink and print sharpness of the display medium of comparison 1 are not good, because the display medium is composed of the coating material made of acryl emulsion.

As for comparison 2, the drying characteristic after printing and the sharpness are not so good because the coating material for the display medium according to comparison 2 does not contain water-soluble polyvinyl alcohol.

As for comparison 3, the water resistance of the display medium is not good and the drying characteristic after printing and the sharpness are inferior, because the display medium according to comparison 3 does not contain silk powder, which is a water absorbent substance, in the coating material.

As for comparison 4, the drying characteristic of the coating material as well as the water resistance of the display medium is poor, because the coating material of the display medium of comparison 4 is made of an aqueous polyvinyl alcohol solution. The drying characteristic of the water base ink after printing and the sharpness are also inferior.

As for comparison 5, the drying characteristic of the coating material is inferior, because the display medium according to comparison 5 does not contain an organic solvent in the coating material though it contains a resin type binder, a water absorbent substance and a water-soluble substance.

### Second embodiment

A coating material for forming an information display medium of the present embodiment can be obtained by adding, stirring and dispersing one or more than one kind of natural organic substance selected from the group consisting of collagen, wool, keratin, egg shell membrane, silk, cellulose, hemp, cotton, chitin, chitosan, water-soluble silk, betaine, soybean protein, casein, and gelatine to an ultraviolet curable resin so that the content of these materials is 1 to 50 wt %.

The printed matter of the present embodiment has a coating film as an information display surface formed by printing the coating material on the article to be printed.

### Example 11

In the aforementioned embodiment, a varnish of which major component is urethane acrylate is used as an ultraviolet curable resin, and collagen powder is used as a natural organic powder. The coating material for forming an information display surface of the present embodiment is prepared by mixing, stirring and dispersing 60 unit by weight of the varnish and 40 unit by weight of collagen powder with a dissolver at below 40°C and 1000 rpm.

The varnish used in the example is Sericol UV PAL (trade name, manufactured by TEIKOKU PRINTING INKS MFG. CO., LTD.). The average particle diameter of the collagen powder is 5 µm.

A coating film to be an information display surface is formed by printing the coating material for forming the information display surface on a flame-treated polyethylene sheet by a silk screen printing machine (300 mesh).

Subsequently, the sheet on which the coating film is formed is put on a belt and the coating film is cured with metal halide lamps (80W / cm × 2 lamps) while moving on a belt at a speed of 10 meters per minute to obtain the printed matter of the present embodiment.

### Comparisons 12 to 24

Coating materials for forming the information display surface are prepared in the same manner as in example 11 replacing a natural organic powder in example 11 with the following substances, and printed matters are obtained.
Wool powder (the average particle diameter is 7 µm) is used in example 12.
Keratin powder (the average particle diameter is 7 µm) is used in example 13.
Silk powder (the average particle diameter is 5 µm) is used in example 14.
Egg shell membrane powder (the average particle diameter is 8 µm) is used in example 15.
Cellulose powder (the average particle diameter is 5 µm) is used in example 16.
Hemp powder (the average particle diameter is 7 µm) is used in example 17.
Cotton powder (the average particle diameter is 7 µm) is used in example 18.
Wood flour (the average particle diameter is 8 µm) is used in example 19.
Chitin powder (the average particle diameter is 10 µm) is used in example 20.
Chitosan powder (the average particle diameter is 8 µm) is used in example 21.
Soybean protein powder (the average particle diameter is 8 µm) is used in example 22.
Casein powder (the average particle diameter is 7 µm) is used in example 23.
Gelatin powder (the average particle diameter is 8 µm) is used in example 24.

### Example 25

Replacing the ultraviolet curable resin in example 11 with aqueous UV coating material, a coating material for forming an information display surface is prepared by mixing, stirring and dispersing 100 unit by weight of the coating material with 40 unit by weight of silk powder (the average particle diameter is 5 µm) in the same manner as in the example 11. The aqueous UV coating material which is used in the example is Sericol UV-AU (trade name, manufactured by TEIKOKU PRINTING INKS MFG. CO., LTD.).

Using the coating material for forming the information display surface, a printed matter of the present example is obtained in the same way as in example 11.

### Example 26

Using a mixture of 5 unit by weight of betaine and 5 unit by weight of methyl cellulose derivative as a natural organic powder, the coating material for the information display surface is prepared and a printed matter is obtained in the same manner as in example 11.

### Example 27

The coating material for forming the information display surface is prepared by mixing water-soluble silk to 20 unit by weight of silk powder (the average particle diameter is 5 µm) and 100 unit by weight of water base UV coating material (the aforementioned Sericol UV - AU) so that the solid content ratio of the water-soluble silk is 5 %, and by stirring and dispersing in the same manner as in example 11 to obtain the coating material for forming the information display surface of the present example.

A printed matter of the present example is obtained in the same manner as in example 11 using the above coating material for forming the information display surface.

### Comparison 6

Silica powder which is a natural inorganic powder is used instead of the natural organic powder. A mixture of 15 unit by weight of the silica powder and 100 unit by weight of the varnish is stirred and dispersed in the same way as in example 11 to prepare the coating material for forming the information display surface of the present comparison.

Using the coating material thus prepared for forming the information display surface, a printed matter of the present comparison is obtained in the same way as in example 11.

### Evaluation of Properties

Printability, writing smoothness, seal impression acceptability, alcohol resistance, hypochlorous acid resistance, and touch are evaluated for the printed matters obtained by the aforementioned examples from 11 to 27 and comparison 6. The results are shown in the following tables 3 and 4.

The evaluation methods and the criteria of the properties are as follows.

The evaluation of the printability is carried out by measuring the drying time from printing by a printer (BUBBLE JET PRINTER BJ10V Lite (trade name) manufactured by CANON Inc.) till the printed letter is dried. 3 : within 1 minute, 2 : less than 1 hour, 3 : more than 1 hour.

The evaluation of writing smoothness is carried out by writing a Japanese letter 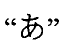 with a water base ink pen (Mitsubishi PIN (trade name) manufactured by MITSUBISHI PENCIL Co., Ltd.) and evaluating the smoothness of the writing in a sensory testing manner. 3 : especially smooth in writing, 2 : smooth in writing, 1 : not smooth.

The evaluation of the seal impression acceptability is carried out by measuring the drying time from stamping with a rubber stamp till the print letter is dried. 3 : within 1 minute, 2 less than 1 hour, 3 : more than 1 hour.

The evaluation of the alcohol resistance is carried out in accordance with the JIS cross-cut adhesion test after the coating film is dipped in 99.5 % ethanol for 24 hours. 3 : more than 5 points, 2 : 3 to 5 points, 1: less than 3 points.

The evaluation of the hypochlorous acid resistance is carried out by the following method. A board on which the coating film is formed is dipped in 1.1 % aqueous sodium hypochlorite solution for 24 hours. After the board is washed and dried, the coating film is rubbed 20 times with gauze to check whether the base of the board is exposed. 3 : no exposure of the base, 2 the base is slightly exposed, 1: the base is completely exposed.

The touch is evaluated through a sensory test by 10 persons. The numerical values in the tables show an average of 10 persons. 3 : good, 2 : normal, 1 : poor.

**Table 3**

| | printability | writing smoothness | stamp acceptability | alcohol resistance | hypochlorous acid resistance | touch |
|---|---|---|---|---|---|---|
| Ex. 11 | 3 | 3 | 3 | 3 | 3 | 2.8 |
| Ex. 12 | 3 | 3 | 3 | 3 | 3 | 2.6 |
| Ex. 13 | 3 | 3 | 3 | 3 | 3 | 2.8 |
| Ex. 14 | 3 | 3 | 3 | 3 | 3 | 2.9 |
| Ex. 15 | 3 | 3 | 3 | 3 | 2 | 2.7 |
| Ex. 16 | 3 | 3 | 3 | 3 | 3 | 2.7 |
| Ex. 17 | 3 | 3 | 3 | 3 | 3 | 2.8 |
| Ex. 18 | 2 | 3 | 2 | 2 | 3 | 2.6 |
| Ex. 19 | 2 | 3 | 2 | 2 | 3 | 2.4 |
| Ex. 20 | 3 | 2 | 2 | 3 | 2 | 2.1 |
| Ex. 21 | 2 | 3 | 2 | 2 | 2 | 2.3 |
| Ex. 22 | 3 | 3 | 3 | 3 | 3 | 2.7 |
| Ex. 23 | 3 | 3 | 3 | 3 | 3 | 2.7 |
| Ex. 24 | 3 | 3 | 3 | 3 | 3 | 2.7 |
| Ex. 25 | 3 | 3 | 3 | 2 | 2 | 2.8 |
| Ex. 26 | 3 | 3 | 3 | 2 | 3 | 2.6 |
| Ex. 27 | 3 | 3 | 3 | 3 | 3 | 2.8 |
| Ex. Is example. | | | | | | |

**Table 4**

| | printability | writing smoothness | stamp acceptability | alcohol resistance | hypochlorous acid resistance | touch |
|---|---|---|---|---|---|---|
| Com. 6 | 1 | 1 | 1 | 1 | 1 | 1.3 |
| Com. is Comparison | | | | | | |

From Table 3, it is understood that every property of the coating films of the printed matter according to examples from 11 to 27, such as printability, writing smoothness, seal impression acceptability, alcohol resistance, hypochlorous acid resistance, and touch is good, because the coating films which serve as the information display surfaces are formed using the coating materials which contain ultraviolet curable resin as a major component and a natural organic substance.

On the other hand, from Table 4, it is understood that every property of the coating film of comparison 6, such as printability, writing smoothness, seal impression acceptability, alcohol resistance, hypochlorous acid resistance, and touch is poor, because the coating film which serves as the information display film is formed using the coating material which contains an ultraviolet curable resin as a major component and contains silica powder instead of a natural organic substance.

### Industrial Availability

Coating material for forming an information display surface according to the present invention can be used to form a medium for writing and printing letters and the like on resin films, plastic products and glass products etc.

## Claims

1. A coating material for forming an information display surface, comprising:
a water absorbent substance; and
a water-soluble substance.

2. The coating material for forming the information display surface according to claim 1, wherein said water absorbent substance is at least one of fine powders selected from the group consisting of protein and polysaccharide.

3. The coating material for forming the information display surface according to claim 2, wherein said protein includes at least one material selected from the group consisting of collagen, silk, wool, keratin, and egg shell membrane.

4. The coating material for forming the information display surface according to claim 2, wherein said polysaccharide includes at least one material selected from the group consisting of cellulose, chitin, and chitosan.

5. The coating material for forming the information display surface according to any one of claims 1 to 4, further comprising a resin type binder in addition to said water absorbent substance and water-soluble substance.

6. A display medium, comprising:
a display base material, wherein an information display surface made of a coating material for forming the information display surface according to any one of claims 1 to 5 is formed on the display base material.

7. The display medium according to claim 6, wherein said display base material contains an inorganic filler.

8. A coating material for forming an information display surface comprising:
an ultraviolet curable resin; and
a natural organic substance.

9. The coating material for forming the information display surface according to claims 8, wherein said natural organic substance is at least one material selected from the group consisting of collagen, wool, keratin, egg shell membrane, silk, cellulose, hemp, cotton, chitin, chitosan, water-soluble silk, betaine, soybean protein, casein, and gelatin.

10. The coating material for forming the information display surface according to claim 8 or 9, wherein a content of said natural organic substance is from 1 to 50 wt %.

11. The coating material for forming the information display surface according to any one of claims 8 to 10, wherein said natural organic substance is powder.

12. The coating material for forming the information display surface according to claim 11, wherein the average particle diameter of said natural organic substance is equal or less than 60 µm.

13. The coating material for forming the information display surface according to any one of claims 8 to 12, wherein said coating material is water based.

14. A display medium, comprising:
an information display surface made of a coating material for forming the information display surface according to any one of claims 8 to 13 formed on a material to be printed.
